# EUROPEAN PATENT SPECIFICATION

(11) **EP 1 642 411 B1**
(45) Date of publication and mention of the grant of the patent: **19.08.2020**
(21) Application number: 04777742.0
(22) Date of filing: 08.07.2004
(51) Int. Cl.: H04L 9/00, G06F 11/30, G06F 12/14, G06F 9/32, H04M 15/00, H04N 7/167, H04K 1/04, H04K 1/06

(54) **METHOD AND APPARATUS FOR SECURITY IN A DATA PROCESSING SYSTEM**
VERFAHREN UND VORRICHTUNG FÜR SICHERHEIT IN EINEM DATENVERARBEITUNGSSYSTEM
PROCÉDÉ ET APPAREIL DE SÉCURITÉ POUR SYSTÈME DE TRAITEMENT DE DONNÉES

(30) Priority: 08.07.2003 US 615882
(43) Date of publication of application: 05.04.2006
(73) Proprietor: Qualcomm, Incorporated, San Diego, CA 92121-1714 (US)
(72) Inventor: HAWKES, Philip, Michael, Ashfield, NSW 2131 (AU); SEMPLE, James, London W11 1JA (GB); ROSE, Gregory, G., San Diego, California 92117 (US)
(74) Representative: Tomkins & Co
(86) International application number: PCT/US2004/021847
(87) International publication number: WO 2005/006643

(56) References cited:
- US-A1- 2001 029 581
- US-B1- 6 690 795
- US-E1- R E33 189
- MENEZES A.J. ET AL.: 'Handbook of applied cryptography', 1997, CRC PRESS ON DISCRETE MATHEMATICS AND ITS APPLICATIONS, BOCA RATON,FL, USA pages 551 - 553, XP002264440

## Description

### BACKGROUND

### Field

The present invention relates to data processing systems generally and specifically, to methods and system for security in a data processing system.

### Background

Security in data processing and information systems, including communications systems, contributes to accountability, fairness, accuracy, confidentiality, operability, as well as a plethora of other desired criteria. Encryption, or the general field of cryptography, is used in electronic commerce, wireless communications, broadcasting, and has an unlimited range of applications. In electronic commerce, encryption is used to prevent fraud in and verify financial transactions. In data processing systems, encryption is used to verify a participant's identity. Encryption is also used to prevent hacking, protect Web pages, and prevent access to confidential documents.

Asymmetric encryption system, often referred to as a cryptosystem, uses a same key (i.e., the secret key) to encrypt and decrypt a message. Whereas an asymmetric encryption system uses a first key (i.e., the public key) to encrypt a message and uses a different key (i,e., the private key) to decrypt it. Asymmetric cryptosystems are also called public key cryptosystems. A problem exists in symmetric cryptosystems in the secure provision of the secret key from a sender to a recipient.

Therefore, there is a need for a secure and efficient provisioning of a secret key between a sender and a recipient.

Menezes A.J. et al "Handbook of Applied Cryptography" 1997, CRC PRESS SERIES ON DISCRETE MATHEMATICES AND ITS APPLICATIONS, BOCA RATON, FL, US XP002264440 pages 551-553 describes techniques for distriibuting confidential keys.

### SUMMARY

Embodiments disclosed herein address the above stated needs by providing a method for security in a data processing system.

In one aspect, a method used for provisioning an access key to receive broadcast services in a terminal storing a private key comprises distributing a public key corresponding to the private key; receiving a secret key encrypted by the public key; decrypting the secret key by the private key; receiving the access key encrypted by the secret key; and decrypting the access key by the secret key. One method used for provisioning an access key to receive broadcast services in a terminal storing a private key comprises distributing a public key corresponding to the private key; receiving the access key encrypted by the public key; and decrypting the access key by the private key. Another method used for provisioning an access key to receive broadcast services in a terminal storing a secret key comprises receiving a public key corresponding to a private key; encrypting the secret key with the public key; sending the encrypted secret key; receiving the access key encrypted by the secret key; and decrypting the access key by the secret key.

In another aspect, a method used for distributing an access key to provide broadcast services from a content provider comprises receiving a public key corresponding to a private key; encrypting secret key using the public key; sending the encrypted secret key; encrypting the access key using the secret key; and sending the encrypted access key. One method used for distributing an access key to provide broadcast services from a content provider comprises receiving a public key corresponding to a private key; encrypting the access key using the pubic key; and sending the encrypted access key. Another method used for distributing an access key to provide broadcast services from a content provider having stored a private key comprises distributing a public key corresponding to the private key; receiving a secret key encrypted by the public key; decrypting the secret key using the private key; encrypting the access key using the secret key; and sending the encrypted access key.

In a still another aspect, a system for provisioning an access key to receive broadcast services in a terminal storing a private key comprises means for distributing a public key corresponding to the private key; means for receiving a secret key encrypted by the public key; means for decrypting the secret key by the private key; means for receiving the access key encrypted by the secret key; and means for decrypting the access key by the secret key. A system for provisioning an access key to receive broadcast services in a terminal storing a private key comprises means for distributing a public key corresponding to the private key; means for receiving the access key encrypted by the public key; and means for decrypting the access key by the private key. Another system for provisioning an access key to receive broadcast services in a terminal storing a secret key comprises means for receiving a public key corresponding to a private key; means for encrypting the secret key with the public key; means for sending the encrypted secret key; means for receiving the access key encrypted by the secret key; and means for decrypting the access key by the secret key.

In a further aspect, a system for distributing an access key to provide broadcast services from a content provider comprises means for receiving a public key corresponding to a private key; means for encrypting secret key using the public key; means for sending the encrypted secret key; means for encrypting the access key using the secret key; and means for sending the encrypted access key. A system for distributing an access key to provide broadcast services from a content provider comprises means for receiving a public key corresponding to a private key; means for encrypting the access key using the pubic key; and means for sending the encrypted access key. Another system for distributing an access key to provide broadcast services from a content provider having stored a private key comprises means for distributing a public key corresponding to the private key; means for receiving a secret key encrypted by the public key; means for decrypting the secret key using the private key; means for encrypting the access key using the secret key; and means for sending the encrypted access key.

In the above embodiment, the secret key may be a registration key or a temporary key.

### BRIEF DESCRIPTION OF THE DRAWINGS

Various embodiments will be described in detail with reference to the following drawings in which like reference numerals refer to like elements, wherein:
FIG. 1A is a diagram of a cryptosystem;
FIG. 1B is a diagram of a symmetric cryptosystem;
FIG. 1C is a diagram of an asymmetric cryptosystem;
FIG. 1D is a diagram of a PGP encryption system;
FIG. IE is a diagram of a PGP decryption system;
FIG. 2 is a diagram of a spread spectrum communication system that supports a number of users;
FIG. 3 shows a simplified system for implementing BCMCS;
FIG. 4 shows a terminal capable of subscribing to BCMCS to receive multimedia content;
FIG. 5A and 5B show provisioning of a secret key in a UIM;
FIG. 6 shows provisioning of an access key in a UIM;
FIG. 7 shows an example method for provisioning a secret key in a UIM;
FIG. 8 shows another example method for provisioning a secret key in a UIM; and
FIG. 9 shows an example method for provisioning an access key in a UIM.

### DETAILED DESCRIPTION

In the following description, specific details are given to provide a thorough understanding of the embodiments. However, it will be understood by one of ordinary skill in the art that the embodiments may be practiced without these specific detail. For example, circuits may be shown in block diagrams in order not to obscure the embodiments in unnecessary detail. In other instances, well-known circuits, structures and techniques may be shown in detail in order not to obscure the embodiments.

Also, it is noted that the embodiments may be described as a process which is depicted as a flowchart, a flow diagram, a structure diagram, or a block diagram. Although a flowchart may describe the operations as a sequential process, many of the operations can be performed in parallel or concurrently. In addition, the order of the operations may be re-arranged. A process is terminated when its operations are completed. A process may correspond to a method, a function, a procedure, a subroutine, a subprogram, etc. When a process corresponds to a function, its termination corresponds to a return of the function to the calling function or the main function.

Wireless communication systems are widely deployed to provide various types of communication such as voice, data, and so on. These systems may be based on code division multiple access (CDMA), time division multiple access (TDMA), or other modulation techniques.

A system may be designed to support one or more standards such as the "TIA/EIA-95-B Mobile Station-Base Station Compatibility Standard for Dual-Mode Wideband Spread Spectrum Cellular System" (the IS-95 standard); the "Global System for Mobile" (GSM) communication standard based on TDMA; the "Universal Mobile Telecommunications Service" (UMTS) standard which is a third generation wireless service based on GSM communication standard; the General Packet Radio System (GPRS) communication standard which is an evolutionary step from GSM toward UMTS; the standard offered by a consortium named "3rd Generation Partnership Project" (3GPP) which is embodied in a set of documents including Document Nos. 3G TS 25.211, 3G TS 25.212, 3G TS 25.213, and 3G TS 25.214, 3G TS 25.302 (the W-CDMA standard); the standard offered by a consortium named "3rd Generation Partnership Project 2" (3GPP2) which is embodied in "TR-45.5 Physical Layer Standard for cdma2000 Spread Spectrum Systems" (the IS-2000 standard).

Each standard defines the processing of data for wireless communication between an infrastructure element, such as a base station, and a user end device, such as a mobile device. For purposes of explanation, the following discussion considers a spread-spectrum communication system consistent with CDMA2000 systems. However, alternative embodiments may incorporate another standard/system.

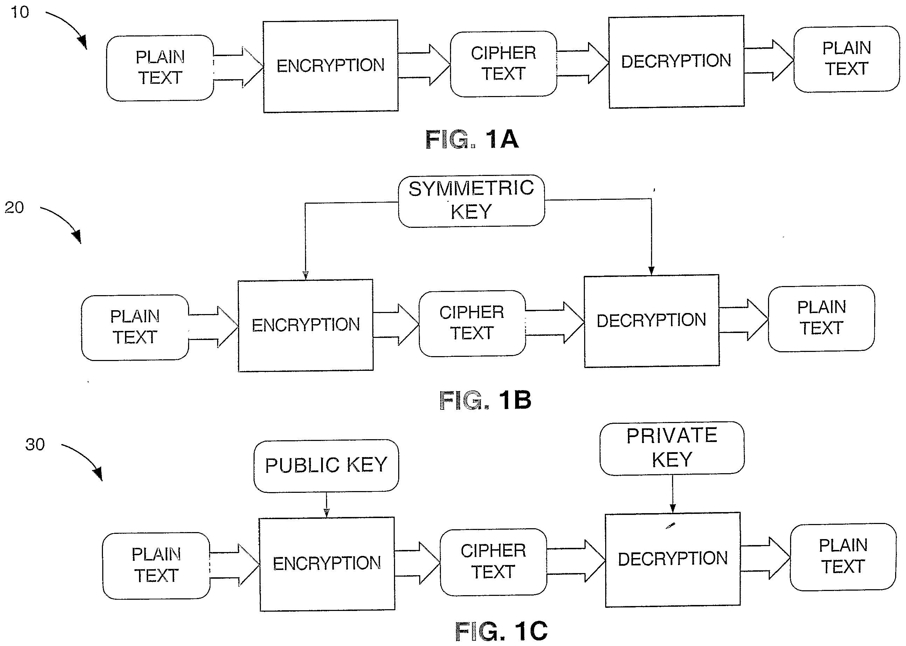

A cryptosystem is a method of disguising messages thus allowing a specific group of users to extract the message. FIG. 1A illustrates a basic cryptosystem 10. Cryptography is the art of creating and using cryptosystems. Cryptanalysis is the art of breaking cryptosystems, i.e., receiving and understanding the message when you are not within the specific group of users allowed access to the message. The original message is referred to as a plaintext message or plaintext. The encrypted message is called a ciphertext, wherein encryption includes any means to convert plaintext into ciphertext. Decryption includes any means to convert ciphertext into plaintext, i.e., recover the original message. As illustrated in FIG. 1A, the plaintext message is encrypted to form a ciphertext. The ciphertext is then received and decrypted to recover the plaintext. While the terms plaintext and ciphertext generally refer to data, the concepts of encryption may be applied to any digital information, including audio and video data presented in digital form. While the description of the invention provided herein uses the term plaintext and ciphertext consistent with the art of cryptography, these terms do not exclude other forms of digital communications.

A cryptosystem is based on secrets. A group of entities shares a secret if an entity outside this group cannot obtain the secret without significantly large amount of resources. This secret is said to serve as a security association between the groups of entities. A cryptosystem may be a collection of algorithms, wherein each algorithm is labeled and the labels are called keys. A symmetric encryption system uses a same key to encrypt and decrypt a message. A symmetric encryption system 20 is illustrated in FIG. 1B, wherein both the encryption and decryption utilize a same private key.

In contrast, an asymmetric encryption system uses a first key referred to as the public key to encrypt a message and uses a different key referred to as the private key to decrypt it. FIG. 1C illustrates an asymmetric encryption system 30 wherein one key is provided for encryption and a second key for decryption. Asymmetric cryptosystems are also called public key cryptosystems. The public key is published and available for encrypting any message, however, only the private key may be used to decrypt the message encrypted with the public key.

A problem exists in symmetric cryptosystems in the secure provision of the secret key from a sender to a recipient. In one solution, a courier may be used to provide the information, or a more efficient and reliable solution may be to use a public key cryptosystem, such as a public-key cryptosystem defined by Rivest, Shamir, and Adleman (RSA) which is discussed hereinbelow. The RSA system is used in the popular security tool referred to as Pretty Good Privacy (PGP).

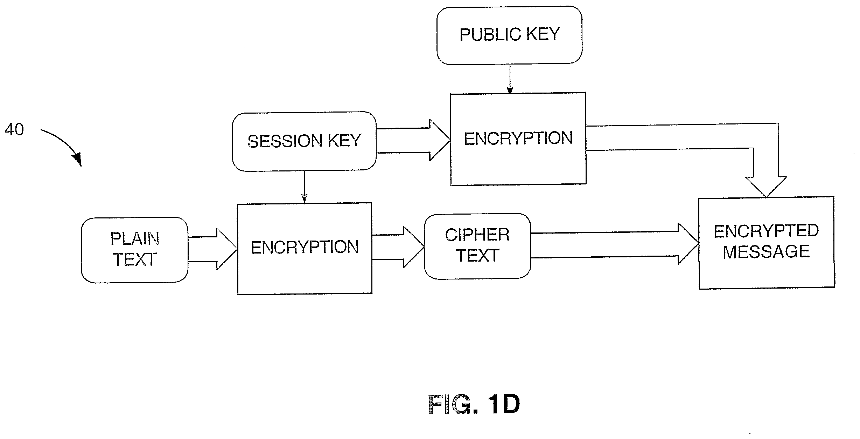

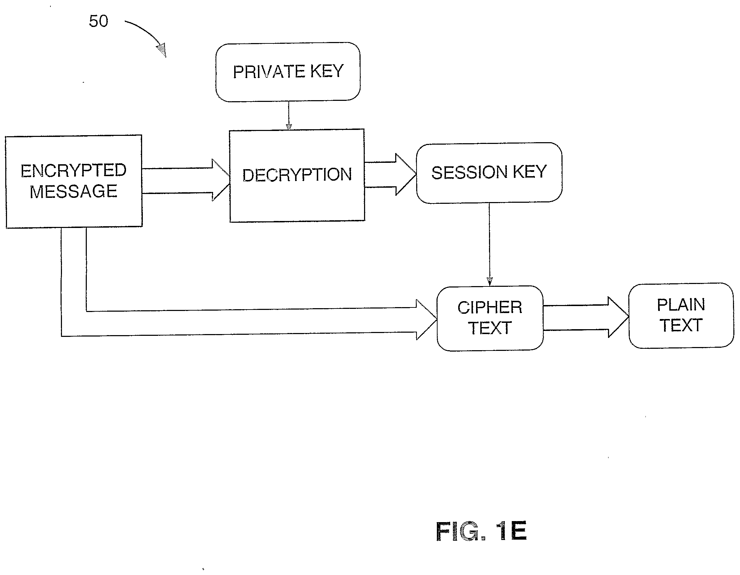

PGP combines features from symmetric and asymmetric encryption. FIGs. 1D and 1E illustrate a PGP cryptosystem 50, wherein a plaintext message is encrypted and recovered. In FIG. 1D, the plaintext message may be compressed to save modem transmission time and disk space. Compression strengthens cryptographic security by adding another level of translation to the encrypting and decrypting processing. Most cryptanalysis techniques exploit patterns found in the plaintext to crack the cipher. Compression reduces these patterns in the plaintext, thereby enhancing resistance to cryptanalysis.

PGP then creates a session key, which is a one-time-only secret key. This key is a random number that may be generated from any random event(s), such as random movements of mouse and the keystrokes while typing. The session key works with a secure encryption algorithm to encrypt the plaintext, resulting in ciphertext. Once the data is encrypted, the session key is then encrypted to the recipient's public key. This public key-encrypted session key is transmitted along with the ciphertext to the recipient.

For decryption, as illustrated in FIG. IE, the recipient's copy of PGP uses a private key to recover the temporary session key, which PGP then uses to decrypt the conventionally encrypted ciphertext. The combination of encryption methods takes advantage of the convenience of public key encryption and the speed of symmetric encryption. Symmetric encryption is generally much faster than public key encryption. Public key encryption in turn provides a solution to key distribution and data transmission issues. In combination, performance and key distribution are improved without significant sacrifice in security.

PGP stores the keys in two files; one for public keys and one for private keys. These files are called keyrings. In application, a PGP encryption system adds the public keys of target recipients to the sender's public keyring. The sender's private keys are stored on the sender's private keyring.

As discussed above, the method of distributing the keys used for encryption and decryption can be complicated. The "key exchange problem" involves first ensuring that keys are exchanged such that both the sender and receiver can perform encryption and decryption, respectively, and for bi-directional communication, such that the sender and receiver can both encrypt and decrypt messages. Further, it is desired that key exchange be performed so as to preclude interception by a third unintended party.

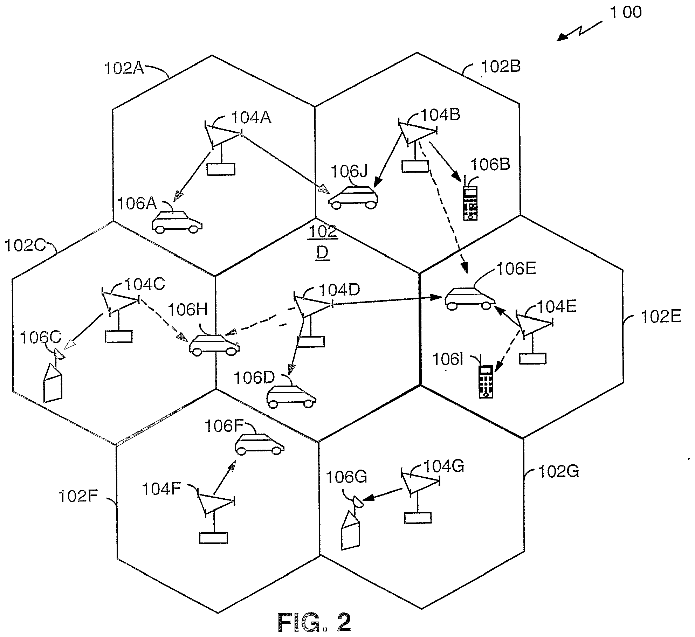

FIG. 2 serves as an example of a communications system 200 that supports a number of users and is capable of implementing at least some aspects and embodiments of the invention. System 200 provides communication for a number of cells 202A through 202G, each of which is serviced by a corresponding base station 204A through 204G, respectively.

Terminals 206 in the coverage area may be fixed (i.e., stationary) or mobile. As shown in FIG. 2, various terminals 206 are dispersed throughout the system. Each terminal 206 communicates with at least one and possibly more base stations 204 on the downlink and uplink at any given moment depending on, for example, whether soft handoff is employed or whether the terminal is designed and operated to (concurrently or sequentially) receive multiple transmissions from multiple base stations. Soft handoff in CDMA communications systems is well known in the art and is described in detail in U.S. Patent No. 5,101,501, entitled "Method and system for providing a Soft Handoff in a CDMA Cellular Telephone System," which is assigned to the assignee of the present invention. The downlink refers to transmission from the base station to the terminal, and the uplink refers to transmission from the terminal to the base station. It is to be noted that various other infrastructure elements other than a base station may be implemented, depending upon a system configuration and/or the standard supported by a system. Also, while a terminal may be a mobile phone, a personal data assistant or some other mobile or fixed station, for purposes of explanation, a mobile station (MS) will be used hereinafter to describe the embodiments.

Increasing demand for wireless data transmission and the expansion of services available via wireless communication technology have led to the development of specific data services. According to one embodiment, the system 200 supports a high-speed multimedia broadcasting service hereafter referred to as High-Speed Broadcast Service (HSBS). An example application for HSBS is video streaming of movies, sports events, etc. The HSBS service is a packet data service based on the Internet Protocol (IP). A service provider may indicate the availability of such high-speed broadcast service to the users. The users desiring the HSBS service subscribe to receive the service and may discover the broadcast service schedule through advertisements, Short Management System (SMS), Wireless Application Protocol (WAP), etc. Base Stations (BSs) transmit HSBS related parameters in overhead messages. When an MS desires to receive the broadcast session, the MS reads the overhead messages and learns the appropriate configurations. The MS then tunes to the frequency containing the HSBS channel, and receives the broadcast service content.

There are several possible subscription/revenue models for HSBS service, including free access, controlled access, and partially controlled access. For free access, no subscription is needed by the mobiles to receive the service. The BS broadcasts the content without encryption and interested mobiles can receive the content. The revenue for the service provider can be generated through advertisements that may also be transmitted in the broadcast channel. For example, upcoming movie-clips can be transmitted for which the studios will pay the service provider.

For controlled access, the MS users subscribe to the service and pay the corresponding fee to receive the broadcast service. Unsubscribed users should not be able to access content broadcast by HSBS. Therefore, controlled access is achieved by encrypting the HSBS transmission/content so that only the subscribed users can decrypt, view and/or process the content. This may use over-the-air encryption key exchange procedures. This scheme provides strong security and prevents theft-of-service.

A hybrid access scheme, referred to as partial controlled access, provides the HSBS service as a subscription-based service that is encrypted with intermittent unencrypted advertisement transmissions. These advertisements may be intended to encourage subscriptions to the encrypted HSBS service. Schedule of these unencrypted segments could be known to the MS through external means.

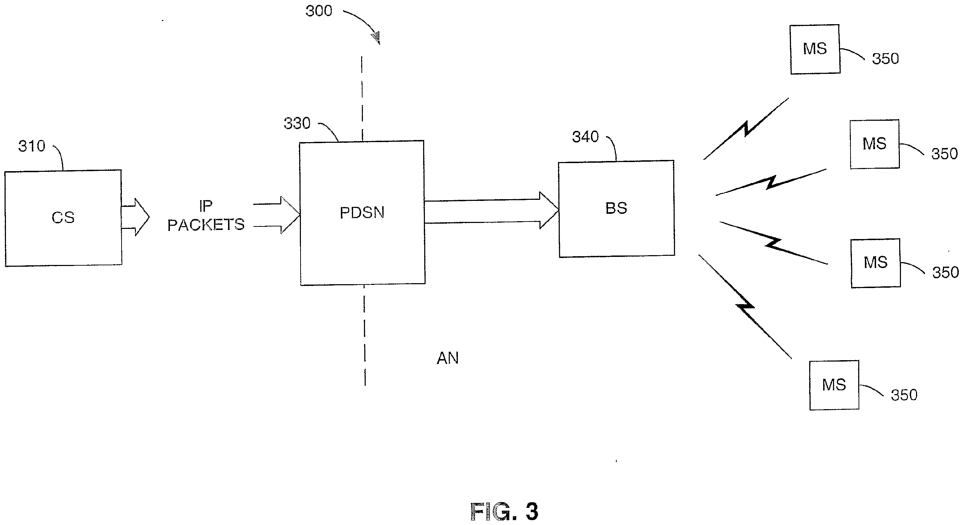

In one embodiment, system 200 supports a particular broadcast service referred to as Broadcast/Multicast service (BCMCS), sometimes referred to as Multimedia Broadcast/Multicast Service (MBMS). Detailed description of BCMCS is disclosed in U.S. Patent Application Serial No. 10/233,188 filed August 28, 2002. Generally, BCMCS is a packet data service based on the Internet Protocol (IP). FIG. 3 shows a simplified network 300 for implementing BCMCS. In network 300, video and/or audio information is provided to Packetized Data Service Network (PDSN) 330 by a Content Source (CS) 310. The video and audio information may be from televised programs or radio transmissions. The information is provided as packetized data, such as in IP packets. PDSN 320 processes the IP packets for distribution within an Access Network (AN). As illustrated, AN is defined as the portions of network 300 including a infrastructure element 340 such as a base station in communication with a plurality of terminals 350 such as mobile stations.

For BCMCS, CS 310 provides unencrypted content. Infrastructure element 340 receives the stream of information from PDSN 330 and provides the information on a designated channel to subscriber terminals within network 300. To control access, the content from CS 310 is encrypted by a content encryptor (not shown) using an encryption key before being provided to PDSN 320. While content encryptor may be implemented together or separately from CS 310, content encryptor and CS 310 will hereinafter be referred to as a content provider. Note that a content provider may also comprise other elements and/or entities such as a subscription manager, a key generators and key managers. The subscribed users are then provided with the decryption key such that the IP packets can be decrypted.

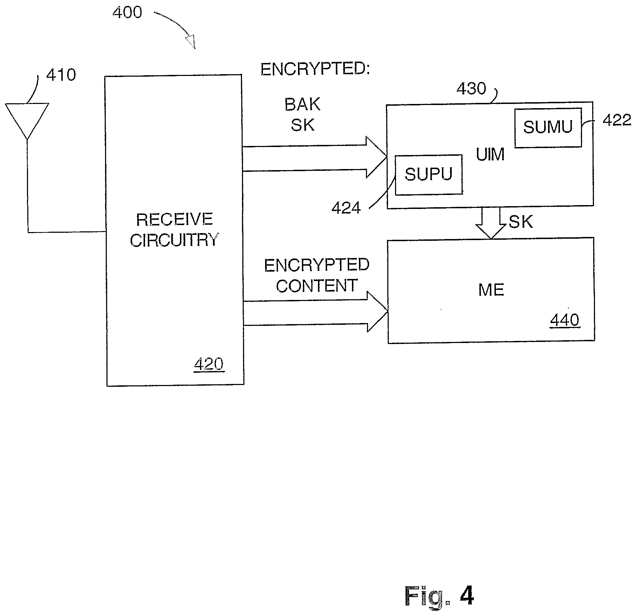

More particularly, FIG. 4 shows a terminal 400 capable of subscribing to BCMCS to receive broadcast content. Terminal 400 comprises an antenna 410 coupled to a receive circuitry 420. Terminal 400 receives transmissions from a content provider (not shown) through an infrastructure element (not shown). Terminal 400 includes a Mobile Equipment (ME) 440 and a User Identification Module (UIM) 430 coupled to receive circuitry 420. Note here that for purposes of explanation, UIM 430 and ME 440 have been separated, but in some embodiments, UIM 430 and ME 440 may be integrated together as one secure processing unit. Also, although the embodiment will be described with reference to UIM, other integrated circuit card or secure processing units may be implemented such as Universal Integrated Circuit Card (UICC), Subscriber Identity Module (SIM) or Universal SIM (USIM).

Generally, UIM 430 applies verification procedures for security of the BCMCS transmission and provides various keys to ME 440. ME 440 performs substantial processing, including, but not limited to, decryption of BCMCS content streams using the keys provided by UIM 430. UIM 430 is trusted to securely store and process secret information (such as encryption keys) that should remain secret for a long time. As UIM 430 is a secure unit, the secrets stored therein do not necessarily require the system to change the secret information often.

UIM 430 may include a processing unit referred to as a Secure UIM Processing Unit (SUPU) 432 and a secure memory storage unit referred to as a Secure UIM Memory Unit (SUMU) 434. Within UIM 430, SUMU 434 stores secret information in a way that discourages unauthorized access to the information. If the secret information is obtained from UIM 430, the access will require significantly large amount of resources. Also within UIM 4330, SUPU 432 performs computations on values that may be external to and/or internal to UIM 430. The results of the computation may be stored in SUMU 434 or passed to ME 440.

UIM 430 may be a stationary unit or integrated within terminal 400. Note that UIM 430 may also include non-secure memory and processor (not shown) for storing information including telephone numbers, e-mail address information, web page or URL address information, and/or scheduling functions, etc. Alternative embodiments may provide a removable and/or reprogrammable UIM. Typically, SUPU 432 does not have significant processing power for functions, such as decryption of the broadcast content of BCMCS, that are beyond security and key procedures, However, alternative embodiments may implement a UIM having stronger processing power.

While UIM 430 is a secure unit, data in ME 440 may be accessed by a non-subscriber and is said to be insecure. Any information passed to ME 440 or processed by the ME 440 remains securely secret for only a short amount of time. It is therefore desired that any secret information, such as key(s), shared with ME 440 be changed often.

More particularly, BCMCS content is typically encrypted using a unique and frequently changing temporary encryption keys referred to as short-term key (SK). In order to decrypt the broadcast content at a particular time, ME 440 must know the current SK. The SK is used to decrypt the broadcast content for a short-amount of time such that SK can be assumed to have some amount of intrinsic monetary value for a user. For example, this intrinsic monetary value may be a portion of the registration costs. Here, different content types may have different intrinsic monetary value. Assuming that the cost of a non-subscriber obtaining SK from ME 440 of a subscriber exceeds the intrinsic monetary value of SK, the cost of obtaining SK illegitimately exceeds the reward and there is no benefit. Consequently, there is no need to protect SK in ME 440. However, if a broadcast has an intrinsic value greater than the cost of illegitimately obtaining this secret key, there is a benefit to the non-subscriber in obtaining such a key from ME 440. Hence, ME 440 ideally will not store secrets with a lifetime longer than that of an SK.

In addition, the channels used by a content provider for transmission of data are considered insecure. Therefore, in BCMCS, SK is not transmitted over the air. It is derived either by UIM 430 or ME 440 from an access key called a broadcast access key (BAK) and SK information (SKI) broadcasted along with the encrypted content. BAK may be used for a certain amount of time, for example one day, one week or a month, and is updated. Within each period for updating the BAK, a shorter interval is provided during which SK is changed. The content provider may use a cryptographic function to determine two values SK and SKI such that SK can be determined from BAK and SKI. In one embodiment, SKI may contain SK that is encrypted using BAK as the key. Alternatively, SK may be a result of applying a cryptographic hash function to the concatenation of SKI and BAK. Here, SKI may be some random value.

To obtain access to BCMCS, a user registers and subscribes to the service. In one embodiment of the registration process, a content provider and UIM 430 agree on a Registration Key or root key (RK) that serves as a security association between the user and the content provider. The registration may occur when a user subscribes to a broadcast channel offered by the content provider or may occur prior to subscription. A single content provider may offer multiple broadcast channels. The content provider may choose to associate users with the same RK for all channels or require users to register for each channel and associate the same user with different RKs on different channels. Multiple content providers may choose to use the same registration keys or require the user to register and obtain a different RK.

If possible, RK is then kept as a secret in UIM 430. RK is unique to a given UIM, i.e., each user is assigned different RKs. However, if a user has multiple UIMs, then these UIMs may be configured to share the same RK depending on the policies of the content provider. The content provider may then send UIM 430 further secret information such as BAK encrypted with RK. UIM 430 is able to recover the value of the original BAK from the encrypted BAK using the RK. Since ME 440 is not a secret unit, UIM 430 typically does not provide BAK to ME 440.

The content provider also broadcasts SKI that is combined with the BAK in UIM 430 to derive SK. UIM 430 then passes SK to ME 340 and ME 440 uses the SK to decrypt encrypted broadcast transmissions received from a content provider. In this way, the content provider can efficiently distribute new values of SK to subscribed users.

As described, controlled access may be achieved by provisioning BAK to UIM 430. However, the broadcast service faces a problem in determining how to provision BAK in UIM 430. In one embodiment, a public cryptosystem is implemented to provision BAK in UIM 430. This assumes that either a terminal or a content provider possesses a private key KPI and can distribute a public key KPU corresponding to the private key.

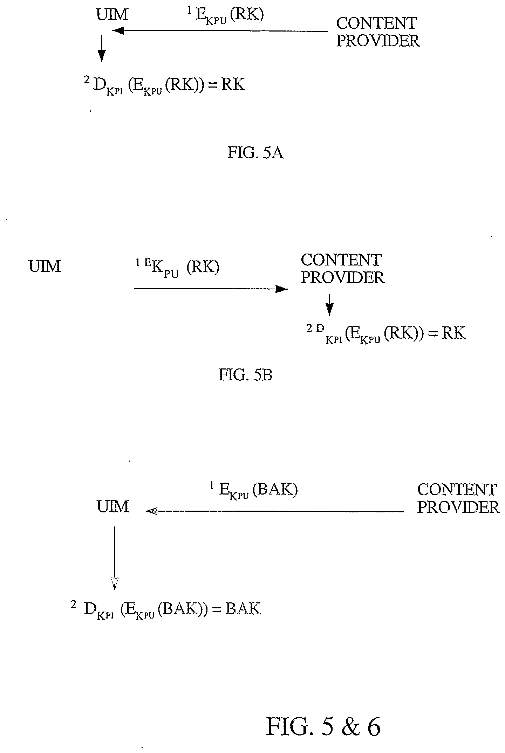

For example, FIG. 5A shows provisioning of RK in UIM 430 if a terminal possesses a private key and FIG. 5B shows provisioning of RK in UIM 430 if a content provider possesses a private key. Here, various known algorithms and/or protocols may be used to establish a private key and to distribute a public key corresponding to the private key. If a terminal is established with a private key, the private key would be securely stored and processed in a secure processing unit such as UIM 430. Also various encryption function E and decryption function D may be used to implement the public cryptosystem.

In FIG. 5A, the content provider encrypts RK using KPU and sends the encrypted RK *E_{K_{PU}}* (*RK*) to UIM 430. UIM 430 decrypts the encrypted RK using KPI such that *D_{K_{PI}}* (*E_{K_{PI}}* (*RK*)) = *RK*. The recovered RK can then be stored securely in SUMU 434. In FIG. 5B, UIM 430 encrypts RK using KPU and sends the encrypted RK *E_{K_{PU}}* (*RK*) to a content provider. Here, SUPU 432 of UIM 430 may perform the decryption and encryption as necessary. Also, UIM 430 may generate a value of RK for secure storage in SUMU 434. Alternatively, RK may be pre-provisioned in SUMU 434, for example at time of manufacture. The content provider decrypts the encrypted RK using KPI such that *D_{K_{PI}}* (*E_{K_{PI}}* (*RK*)) = *RK.* Once RK is provisioned as described, BAK may be encrypted using RK as described above and sent from a content provider to a terminal.

In an alternative embodiment, a temporary key (TK) rather than RK may be used to encrypt BAK. Temporary keys may be used to further deter unauthorized users from accessing broadcast contents. If RK is provisioned in UIM 430, a content provider may send TKs to UIM 430 by encrypting TK using RK. The content provider then sends BAK encrypted using a current value of TK such that UIM 430 can decrypt the encrypted BAK using only the current value of TK. However, in some situations, RK may be available and/or a temporary key is desired. For example, if a user wishes to subscribe for a short or fixed period of time to receive certain broadcast service, a temporary key would be preferred. Therefore, a public cryptosystem may be used to provision the TK.

If a terminal possesses the private key, a content provider would encrypts TK using KPU and send the encrypted TK *E_{K_{PU}}* (*TK*) to UIM 430 and UIM 430 would decrypt the encrypted TK such that *D_{K_{PI}}* (*E_{K_{PU}}* (*TK*)) = *TK*. The recovered RK can be stored securely in SUMU 434. If a content provider possesses the private key, UIM 430 would encrypt TK using KPU and send the encrypted TK *E_{K_{PU}}* (*TK*) to a content provider and the content provider would decrypt the encrypted TK such that *D_{K_{pI}}* (*E_{K_{PU}}* (*TK*)) = *TK*. Here, SUPU 432 of UIM 430 may perform the decryption and encryption as necessary. Moreover, a content provider may generate TKs if the terminal possesses the private key and UIM 430 may generate TKs if the content provide possesses the private key. Once a value of TK is provisioned, BAK may be encrypted using TK in a manner analogous to encryption by RK and sent from a content provider to a terminal.

FIG. 6 shows another embodiment in which BAK is provisioned directly using a public cryptosystem. Here, a terminal would possess the private key and a content provider would encrypt BAK using KPU and send the encrypted BAK *E_{K_{PU}}* (*BAK*) to UIM 430. UIM 430 would decrypt the encrypted BAK such that *D_{K_{PI}}* (*E_{K_{PU}}* (*BAK*)) = *BAK*. SUPU 432 of UIM 430 may perform the decryption as necessary.

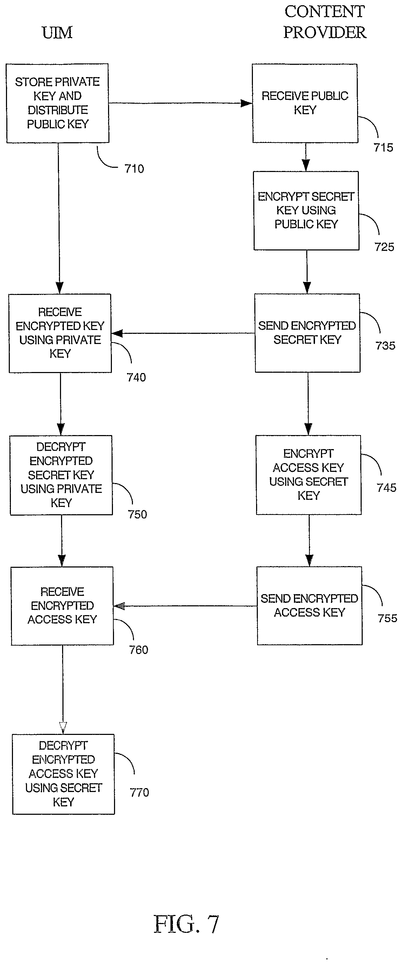

Accordingly, BAK may be provisioned in UIM 430 by various different methods. Particularly, FIG. 7 shows one example method 700 for provisioning of BAK in a terminal if the terminal possesses a private key. Method 700 begins when UIM of the terminal distributes a public key corresponding to the private key (710). After receiving the public key (715), the content provider encrypts RK using the public key (725). The encrypted RK is sent to UIM (735). UIM receives the encrypted RK (740) and decrypts encrypted RK using the private key (750). The recovered RK is stored in a secure memory such as SUMU 434. At the content provider, BAK is encrypted using RK (745) and the encrypted BAK (EBAK) is sent to the terminal (755). UIM then receives EBAK is received (760) and decrypts EBAK using RK (770).

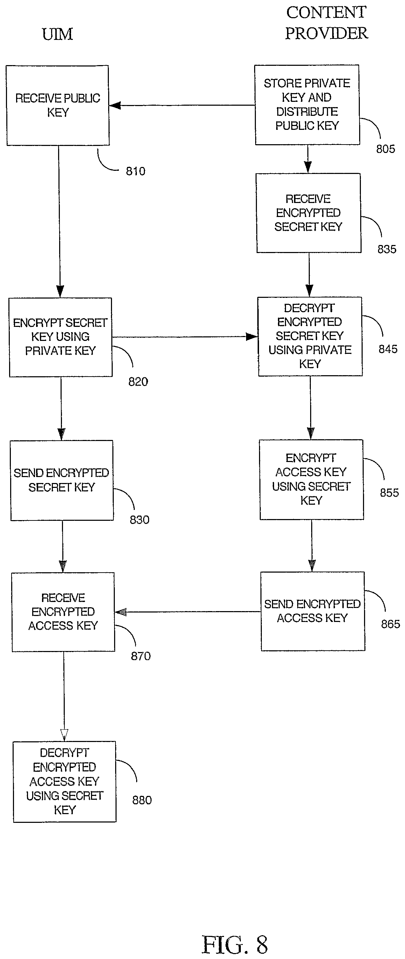

FIG. 8 shows another example method 800 for provisioning of BAK in a terminal when a content provider possesses a private key. Method 800 begins when a content provider distributes a public key corresponding to the private key (805). After receiving the public key (810), UIM of the terminal encrypts RK using the public key (820). The RK would be stored in a secure memory such as SUMU 434. The encrypted RK is sent to a content provider (830). The content provider receives the encrypted RK (835) and decrypts RK using the private key (845). The content provider encrypt BAK using RK (855) and the encrypted BAK (EBAK) is sent to the terminal (865). UIM then receives EBAK (870) and decrypts EBAK using RK (880).

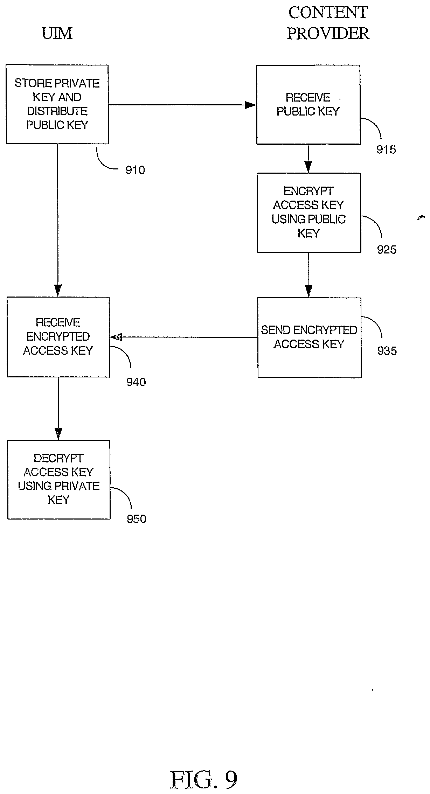

FIG. 9 shows another example method 700 for provisioning BAK when a terminal possesses a private key. Method 900 begins when UIM distributes a public key corresponding to the private key (910). After receiving the public key (915), the content provider encrypts BAK using the public key (925). The encrypted BAK (EBAK) is sent to UIM (935). UIM receives the receives EBAK (940) and decrypts EBAK using the private key (770).

Once BAK is provisioned in a terminal, broadcast content can be encrypted with SK and a terminal can derive SK based on BAK to view/process the encrypted broadcast content.

In methods 700 and 800, more than one value of RK may be provisioned in a UIM as the content provider may choose to associate users with the same RK for all channels or require users to register for each channel and associate the same user with different RKs. Moreover, although the methods are described with reference to RK, other secret keys may such as TK may be provisioned in a manner analogous to RK. Furthermore, access keys other than BAK may be provisioned by RK and TK as described. Similarly, method 900 may be used to provision access keys other than BAK.

Provisioning of an access key such as BAK using the public cryptosystem as described eliminates a need for a provisioning pre-shared secret key such a RK or TK, which can often involve complex procedures. Also, a user may wish to transfer a legacy SIM card or Removable UIM (R-UIM) to a new broadcast-capable terminal. The legacy SIM/R-UIM may still be used for normal mobile service, and the functionality required for broadcast can be incorporated into the terminal. The public cryptosystem for provisioning BAK allows the new terminal to easily share a key with the network.

In addition, distribution of a public key is easier than distribution of symmetric keys. Knowledge of the public key associated with a first entity does not give a second entity the ability to decrypt message intended for the first entity. This allows public keys to be distributed/sent un-encrypted. Moreover, when communicating with the first, all other entities can use a single public key corresponding to the private key possessed by the first entity. Likewise, the first entity need only store one key for decrypting messages coming from the other entities. If symmetric keys are used, it would be necessary (or at least preferable) for distinct entities use distinct symmetric keys when sending data (such as BAK) to the first entity, requiring the first entity to store a symmetric key for each entity that it communicates with.

Furthermore, knowing the public key corresponding to a private key possessed by a first entity does not make the first entity open to compromise. However, revealing a symmetric secret key possessed by a first entity may make the first entity open to compromise. Consequently, a single public key for a terminal/UIM can be distributed to multiple content providers without significant concerns as sharing a symmetric secret key such as RK widely.

Finally, it is to be noted that embodiments may be implemented by hardware, software, firmware, middleware, microcode, or any combination thereof. When implemented in software, firmware, middleware or microcode, the program code or code segments to perform the necessary tasks may be stored in a machine readable medium such as SUMU 434 or other mediums (not shown). A processor such as SUPU 434 or other processor (not shown) may perform the necessary tasks. A code segment may represent a procedure, a function, a subprogram, a program, a routine, a subroutine, a module, a software package, a class, or any combination of instructions, data structures, or program statements. A code segment may be coupled to another code segment or a hardware circuit by passing and/or receiving information, data, arguments, parameters, or memory contents. Information, arguments, parameters, data, etc. may be passed, forwarded, or transmitted via any suitable means including memory sharing, message passing, token passing, network transmission, etc.

Therefore, the foregoing embodiments are merely examples and are not to be construed as limiting the invention. The description of the embodiments is intended to be illustrative, and not to limit the scope of the claims. As such, the present teachings can be readily applied to other types of apparatuses and many alternatives, modifications, and variations will be apparent to those skilled in the art.

## Claims

1. A method used for provisioning an access key to receive broadcast services in a terminal storing a private key comprising:
distributing (710) a public key corresponding to the private key;
receiving (740) a secret key encrypted by the public key;
decrypting (750) the secret key by the private key;
receiving (770) the access key encrypted by the secret key;
decrypting the access key by the secret key;
deriving a short key based on the access key;
receiving encrypted broadcast content; and
decrypting the encrypted broadcast content using the short key.

2. A method used for provisioning an access key to receive broadcast services in a terminal storing a private key comprising:
distributing (910) a public key corresponding to the private key;
receiving (940) the access key encrypted by the public key;
decrypting (950) the access key by the private key;
deriving a short key based on the access key;
receiving encrypted broadcast content; and
decrypting the encrypted broadcast content using the short key.

3. A method used for provisioning an access key to receive broadcast services in a terminal storing a secret key comprising:
receiving (810) a public key corresponding to a private key;
encrypting (820) the secret key with the public key;
sending (830) the encrypted secret key;
receiving (870) the access key encrypted by the secret key;
decrypting (880) the access key by the secret key;
deriving a short key based on the access key;
receiving encrypted broadcast content; and
decrypting the encrypted broadcast content using the short key.

4. The method of any preceding claim, wherein the secret key is one of either a registration key or a temporary key.

5. The method as in any preceding claim, further comprising: deriving a short key based on the access key; receiving encrypted broadcast content; and decrypting the encrypted broadcast content using the short key.

6. System for provisioning an access key to receive broadcast services in a terminal storing a private key comprising:
means for distributing a public key corresponding to the private key;
means for receiving a secret key encrypted by the public key;
means for decrypting the secret key by the private key;
means for receiving the access key encrypted by the secret key;
means for decrypting the access key by the secret key;
means for deriving a short key based on the access key;
means for receiving encrypted broadcast content; and
means for decrypting the encrypted broadcast content using the short key.

7. System for provisioning an access key to receive broadcast services in a terminal storing a private key comprising:
means for distributing a public key corresponding to the private key;
means for receiving the access key encrypted by the public key;
means for decrypting the access key by the private key;
means for deriving a short key based on the access key;
means for receiving encrypted broadcast content; and
means for decrypting the encrypted broadcast content using the short key.

8. System for provisioning an access key to receive broadcast services in a terminal storing a secret key comprising:
means for receiving a public key corresponding to a private key;
means for encrypting the secret key with the public key;
means for sending the encrypted secret key;
means for receiving the access key encrypted by the secret key;
means for decrypting the access key by the secret key;
means for deriving a short key based on the access key;
means for receiving encrypted broadcast content; and
means for decrypting the encrypted broadcast content using the short key.

9. The system of any of claims 6 to 8, wherein the secret key is one of either a registration key or a temporary key.

10. A computer program comprising computer program code means adapted to perform all the steps of the method of any of claims 1 to 5 when said program is run on a computer.

## Patentansprüche

1. Ein Verfahren, das verwendet wird zum Vorsehen eines Zugriffsschlüssels zum Empfangen von Broadcast-Diensten in einem Endgerät, das einen privaten Schlüssel speichert, das Folgendes aufweist:
Verteilen (710) eines öffentlichen Schlüssels entsprechend dem privaten Schlüssel;
Empfangen (740) eines geheimen Schlüssels, der durch den öffentlichen Schlüssel verschlüsselt ist;
Entschlüsseln (750) des geheimen Schlüssels durch den privaten Schlüssel;
Empfangen (770) des Zugriffsschlüssels, der durch den geheimen Schlüssel verschlüsselt ist;
Entschlüsseln des Zugriffsschlüssels durch den geheimen Schlüssel;
Herleiten eines Kurzschlüssels basierend auf dem Zugriffsschlüssel;
Empfangen von verschlüsseltem Broadcast-Inhalt; und
Entschlüsseln des verschlüsselten Broadcast-Inhalts unter Verwendung des Kurzschlüssels.

2. Ein Verfahren, das verwendet wird zum Vorsehen eines Zugriffsschlüssel zum Empfangen von Broadcast-Diensten in einem Endgerät, das einen privaten Schlüssel speichert, das Folgendes aufweist:
Verteilen (910) eines öffentlichen Schlüssels, der dem privaten Schlüssel entspricht;
Empfangen (940) des Zugriffsschlüssels, der durch den öffentlichen Schlüssel verschlüsselt ist;
Entschlüsseln (950) des Zugriffsschlüssels durch den privaten Schlüssel;
Herleiten eines Kurzschlüssels basierend auf dem Zugriffsschlüssel;
Empfangen von verschlüsseltem Broadcast-Inhalt; und
Entschlüsseln des verschlüsselten Broadcast-Inhalts unter Verwendung des Kurzschlüssels.

3. Ein Verfahren, das verwendet wird zum Vorsehen eines Zugriffsschlüssels zum Empfangen von Broadcast-Diensten in einem Endgerät, das einen geheimen Schlüssel speichert, das Folgendes aufweist:
Empfangen (810) eines öffentlichen Schlüssels, der einem privaten Schlüssel entspricht;
Entschlüsseln (820) des geheimen Schlüssels mit dem öffentlichen Schlüssel;
Senden (830) des verschlüsselten geheimen Schlüssels;
Empfangen (870) des Zugriffsschlüssels, der durch den geheimen Schlüssel verschlüsselt ist;
Entschlüsseln (880) des Zugriffsschlüssels durch den geheimen Schlüssel;
Herleiten eines Kurzschlüssels basierend auf dem Zugriffsschlüssel;
Empfangen von verschlüsseltem Broadcast-Inhalt; und
Entschlüsseln des verschlüsselten Broadcast-Inhalts unter Verwendung des Kurzschlüssels.

4. Verfahren nach einem vorhergehenden Anspruch, wobei der geheime Schlüssel eines von entweder einem Registrierungsschlüssel oder einem temporären Schlüssel ist.

5. Verfahren nach einem vorhergehenden Anspruch, das weiter Folgendes aufweist: Herleiten eines Kurzschlüssels basierend auf dem Zugriffsschlüssel; Empfangen von verschlüsseltem Broadcast-Inhalt; und Entschlüsseln des verschlüsselten Broadcast-Inhalts unter Verwendung des Kurzschlüssels.

6. System zum Vorsehen eines Zugriffsschlüssels zum Empfangen von Broadcast-Diensten in einem Endgerät, das einen privaten Schlüssel speichert, das Folgendes aufweist:
Mittel zum Verteilen eines öffentlichen Schlüssels entsprechend dem privaten Schlüssel;
Mittel zum Empfangen eines geheimen Schlüssels, der durch den öffentlichen Schlüssel verschlüsselt ist;
Mittel zum Entschlüsseln des geheimen Schlüssels durch den privaten Schlüssel;
Mittel zum Empfangen des Zugriffsschlüssels, der durch den geheimen Schlüssel verschlüsselt ist;
Mittel zum Entschlüsseln des Zugriffsschlüssels durch den geheimen Schlüssel;
Mittel zum Herleiten eines Kurzschlüssels basierend auf dem Zugriffsschlüssel;
Mittel zum Empfangen von verschlüsselte Broadcast-Inhalt; und
Mittel zum Entschlüsseln des verschlüsselten Broadcast-Inhalts unter Verwendung des Kurzschlüssels.

7. System zum Vorsehen eines Zugriffsschlüssels zum Empfangen von Broadcast-Diensten in einem Endgerät, das einen privaten Schlüssel speichert, das Folgendes aufweist:
Mittel zum Verteilen eines öffentlichen Schlüssels, der dem privaten Schlüssel entspricht;
Mittel zum Empfangen des Zugriffsschlüssels, der durch den öffentlichen Schlüssel verschlüsselt ist;
Mittel zum Entschlüsseln des Zugriffsschlüssels durch den privaten Schlüssel;
Mittel zum Herleiten eines Kurzschlüssels basierend auf dem Zugriffsschlüssel;
Mittel zum Empfangen von verschlüsseltem Broadcast-Inhalt; und
Mittel zum Entschlüsseln des verschlüsselten Broadcast-Inhalts unter Verwendung des Kurzschlüssels.

8. System zum Vorsehen eines Zugriffsschlüssels zum Empfangen von Broadcast-Diensten in einem Endgerät, das einen geheimen Schlüssel speichert, das Folgendes aufweist:
Mittel zum Empfangen eines öffentlichen Schlüssels, der einem privaten Schlüssel entspricht;
Mittel zum Entschlüsseln des geheimen Schlüssels mit dem öffentlichen Schlüssel;
Mittel zum Senden des verschlüsselten geheimen Schlüssels;
Mittel zum Empfangen des Zugriffsschlüssels, der durch den geheimen Schlüssel verschlüsselt ist;
Mittel zum Entschlüsseln des Zugriffsschlüssels durch den geheimen Schlüssel;
Mittel zum Herleiten eines Kurzschlüssels basierend auf dem Zugriffsschlüssel;
Mittel zum Empfangen von verschlüsseltem Broadcast-Inhalt; und
Mittel zum Entschlüsseln des verschlüsselten Broadcast-Inhalts unter Verwendung des Kurzschlüssels.

9. System nach einem der Ansprüche 6 bis 8, wobei der geheime Schlüssel eines von entweder einen Registrierungsschlüssel oder einem temporären Schlüssel ist.

10. Ein Computerprogramm, das Computerprogrammcodemittel aufweist, die ausgelegt sind zum Durchführen aller Schritte des Verfahrens nach einem der Ansprüche 1 bis 5, wenn das Programm auf einem Computer ausgeführt wird.

## Revendications

1. Procédé utilisé pour fournir une clé d'accès pour recevoir des services de diffusion dans un terminal stockant une clé privée comprenant les étapes consistant à :
distribuer (710) une clé publique correspondant à la clé privée ;
recevoir (740) une clé secrète cryptée par la clé publique ;
décrypter (750) la clé secrète par la clé privée ;
recevoir (770) la clé d'accès cryptée par la clé secrète ;
décrypter la clé d'accès par la clé secrète ;
dériver une clé courte sur la base de la clé d'accès ;
recevoir du contenu diffusé crypté ; et
décrypter le contenu de diffusion crypté en utilisant la clé courte.

2. Procédé utilisé pour fournir une clé d'accès pour recevoir des services de diffusion dans un terminal stockant une clé privée comprenant les étapes consistant à :
distribuer (910) une clé publique correspondant à la clé privée ;
recevoir (940) la clé d'accès cryptée par la clé publique ;
décrypter (950) la clé d'accès par la clé privée ;
dériver une clé courte sur la base de la clé d'accès ;
recevoir du contenu diffusé crypté ; et
décrypter le contenu de diffusion crypté en utilisant la clé courte.

3. Procédé utilisé pour fournir une clé d'accès pour recevoir des services de diffusion dans un terminal stockant une clé secrète comprenant les étapes consistant à :
recevoir (810) une clé publique correspondant à une clé privée ;
crypter (820) la clé secrète avec la clé publique ;
envoyer (830) la clé secrète cryptée ;
recevoir (870) la clé d'accès cryptée par la clé secrète ;
décrypter (880) la clé d'accès par la clé secrète ;
dériver une clé courte sur la base de la clé d'accès ;
recevoir du contenu diffusé crypté ; et
décrypter le contenu de diffusion crypté en utilisant la clé courte.

4. Procédé selon l'une quelconque des revendications précédentes, dans lequel la clé secrète est une parmi une clé d'enregistrement ou une clé temporaire.

5. Procédé selon l'une quelconque des revendications précédentes, comprenant en outre : la dérivation d'une clé courte sur la base de la clé d'accès ; et les étapes consistant à recevoir du contenu diffusé crypté ; et décrypter le contenu de diffusion crypté en utilisant la clé courte.

6. Système pour assurer la fourniture d'une clé d'accès pour recevoir des services de diffusion dans un terminal stockant une clé privée comprenant :
des moyens pour distribuer une clé publique correspondant à la clé privée ;
des moyens pour recevoir une clé secrète cryptée par la clé publique ;
des moyens pour décrypter la clé secrète par la clé privée ;
des moyens pour recevoir la clé d'accès cryptée par la clé secrète ;
des moyens pour décrypter la clé d'accès par la clé secrète ;
des moyens pour dériver une clé courte sur la base de la clé d'accès ;
des moyens pour recevoir un contenu de diffusion crypté ; et
des moyens pour décrypter le contenu de diffusion crypté en utilisant la clé courte.

7. Système pour assurer la fourniture d'une clé d'accès pour recevoir des services de diffusion dans un terminal stockant une clé privée comprenant :
des moyens pour distribuer une clé publique correspondant à la clé privée ;
des moyens pour recevoir la clé d'accès cryptée par la clé publique ;
des moyens pour décrypter la clé d'accès par la clé privée ;
des moyens pour dériver une clé courte sur la base de la clé d'accès ;
des moyens pour recevoir un contenu de diffusion crypté ; et
des moyens pour décrypter le contenu de diffusion crypté en utilisant la clé courte.

8. Système pour assurer la fourniture d'une clé d'accès pour recevoir des services de diffusion dans un terminal stockant une clé secrète comprenant :
des moyens pour recevoir une clé publique correspondant à une clé privée ;
des moyens pour crypter la clé secrète avec la clé publique ;
des moyens pour envoyer la clé secrète cryptée ;
des moyens pour recevoir la clé d'accès cryptée par la clé secrète ;
des moyens pour décrypter la clé d'accès par la clé secrète ;
des moyens pour dériver une clé courte sur la base de la clé d'accès ;
des moyens pour recevoir un contenu de diffusion crypté ; et
des moyens pour décrypter le contenu de diffusion crypté en utilisant la clé courte.

9. Système selon l'une quelconque des revendications 6 à 8, dans lequel la clé secrète est l'une parmi une clé d'enregistrement ou une clé temporaire.

10. Programme informatique comprenant des moyens de code de programme informatique adaptés pour exécuter toutes les étapes du procédé selon l'une quelconque des revendications 1 à 5 lorsque ledit programme est exécuté sur un ordinateur.
